# EUROPÄISCHE PATENTSCHRIFT

(11) **EP 0 697 272 B1**
(45) Veröffentlichungstag und Bekanntmachung des Hinweises auf die Patenterteilung: **24.09.1997**
(21) Anmeldenummer: 95110909.9
(22) Anmeldetag: 12.07.1995
(51) Int. Cl.: B29C 44/18, B29C 70/84, B29C 51/16

(54) **Verfahren und Vorrichtung zur Herstellung von Verbund-Badewannen**
Method and apparatus for making composite bathtubs
Procédé et dispositif pour la fabrication des baignoires composites

(30) Priorität: 18.08.1994 DE 4428896; 06.09.1994 DE 4431716
(43) Veröffentlichungstag der Anmeldung: 21.02.1996
(73) Patentinhaber: FRANZ KALDEWEI GMBH & CO., 59229 Ahlen (DE)
(72) Erfinder: Pieper, Fritz, D-27775 Delmenhorst (DE)
(74) Vertreter: Fritz, Edmund Lothar, Dipl.-Chem.

(56) Entgegenhaltungen:
- EP-A- 0 052 869
- EP-A- 0 370 918
- EP-A- 0 563 670
- FR-A- 2 087 513
- FR-A- 2 671 307
- US-A- 3 614 793
- US-A- 4 750 967
- PATENT ABSTRACTS OF JAPAN vol. 11 no. 175 (M-596) [2622] ,5.Juni 1987 & JP-A-62 005835 (KAWASAKI STEEL) 12.Januar 1987,

## Beschreibung

Die vorliegende Erfindung bezieht sich auf ein Verfahren und auf eine Vorrichtung zur Herstellung von Verbund-Badewannen mit den Merkmalen nach dem Oberbegriff des Hauptanspruchs.

Verbund-Badewannen im Sinne der Anmeldung können bestehen aus einer Innenschale aus Kunststoff und einer Außenschale aus Stahl mit einem dazwischenliegenden Füllstoff. Während die Außenschale aus Stahl, insbesondere zur Stabilisierung dient, soll die Innenschale aus Kunststoff den sanitären Ansprüchen genügen. Der Füllstoff soll die Stabilität verbessern und zur Wärme- bzw. Schallisolierung dienen.

Im Prinzip ist der Aufbau einer derartigen Verbund-Badewanne aus der DE-OS 26 18 070 bekannt.

Aus der EP 0 370 918 (A2) ist ein Verfahren zur Herstellung von Verbundbadewannen bekannt gemäß dem einleitenden Teil des Anspruchs 1, bei dem die Verbundbadewanne eine Innenschale aus Kunststoff und eine Außenschale hat, die ebenfalls aus Kunststoff ist. Die Außenschale wird über die Innenschale gestülpt und justiert, so daß zwischen den beiden Schalen ein Zwischenraum bleibt und beide Schalen werden durch eine Spannvorrichtung eingespannt. In den Zwischenraum wird dann Polyesterbeton gegossen.

Der vorliegenden Erfindung liegt daher die Aufgabe zugrunde, ein Verfahren bzw. eine Vorrichtung zur Herstellung von Verbundbadewannen der eingangs genannten Art zu schaffen, das für eine wirtschaftliche Herstellung solcher Verbundbadewannen geeignet ist.

Diese Aufgabe wird durch ein Verfahren nach dem Hauptanspruch gelöst. Der Anspruch 2 hat eine Vorrichtung zur Durchführung dieses Verfahrens zum Inhalt.

Bei diesem erfindungsgemäßen Verfahren werden zunächst die Kunststoffschale einerseits und die Stahlschale andererseits in herkömmlicher Weise in einer der Badewanne entsprechenden Form durch Tiefziehen hergestellt, wobei sich die weiteren erforderlichen Arbeitsgänge wie Beizen, Emaillieren usw. anschließen. Um die Verbindung herzustellen wird zunächst die Kunststoffschale umgekehrt, d.h. mit dem Wannenrand nach unten mit ihrem Rand auf die Grundplatte eines Spannwerkzeuges aufgelegt, wobei sie durch ein Stützgestell positioniert wird. Die vorbereitete Stahlwanne wird dann aufgestülpt und justiert. Abstandshalter gewährleisten einen gleichmäßigen Zwischenraum zwischen den beiden Schalen der im Bereich von 3 mm etwa liegt. Die beiden Wannen werden alsdann ringsum durch ein Spannwerkzeug eingespannt. Dabei ist ein Dichtungsrahmen dieses Werkzeugs so ausgebildet, daß sich der Zwischenraum zwischen den beiden Schalen ringsum neben dem Kragen der Kunststoffschale in Form eines umlaufenden und abgedichteten Ringraumes fortsetzt, der an dem Zwischenraum anschließt. Der Füllstoff, vorzugsweise Polyurethan wird in die Abflußöffnung der Stahlschale injiziert. Gleichzeitig wird dabei der umlaufende Ringraum neben dem Kragen der Kunststoffwanne an ein Vakuum angeschlossen. Durch das Vakuum wird der punktuell eingeführte flüssige Kunststoff unverzüglich zum Rand hin gezogen, so daß er sich gleichmäßig über die gesamte Wannenfläche verteilt. Die Wirtschaftlichkeit des Verfahrens nach der Erfindung ergibt sich nicht nur durch die Qualität des Erzeugnisses, sondern auch durch den geringen Zeitaufwand des eigentlichen Verfahrens und der Rüstzeiten.

Im folgenden wird anhand der beiliegenden Zeichnungen ein Ausführungsbeispiel der Erfindung beschrieben.
- Fig. 1: zeigt im Prinzip einen Längsschnitt durch eine Verbundbadewanne;
- Fig. 2: zeigt einen Schnitt des Bereichs II von Fig. 1 in vergrößertem Maßstab;
- Fig. 3: zeigt einen Schnitt durch ein Einspannwerkzeug,wie es bei der Durchführung des erfindungsgemäßen Verfahren angewandt werden kann;
Zunächst wird auf Fig. 1 und 2 Bezug genommen.

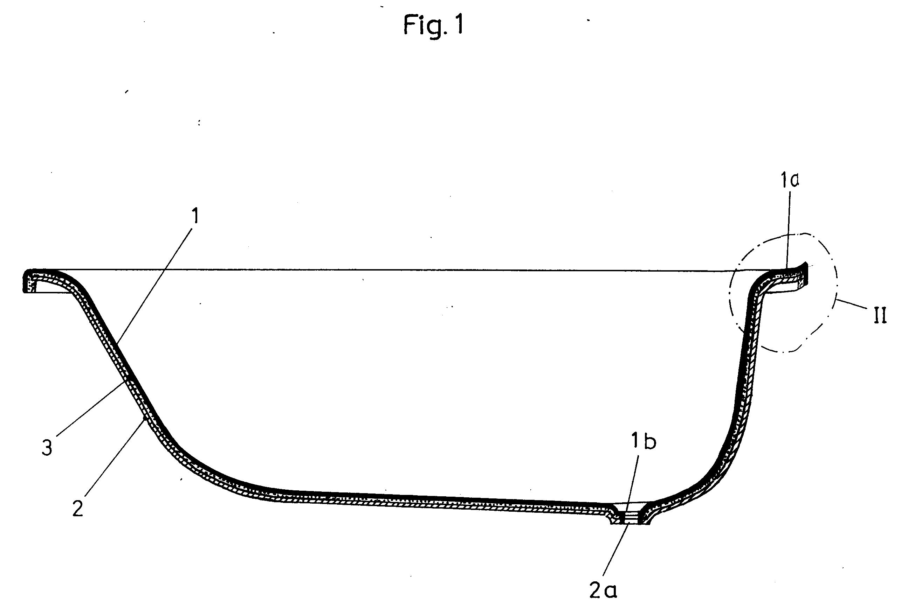

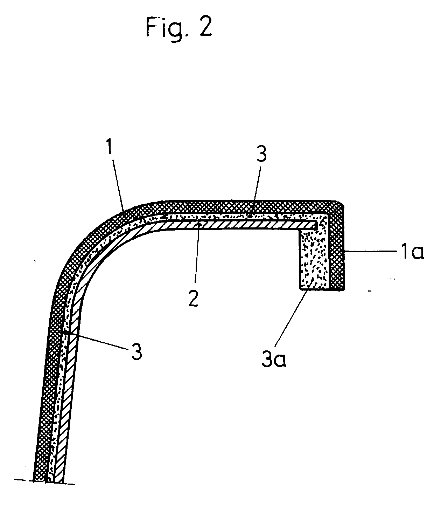

Die fertiggestellte Verbundbadewanne gemäß Fig. 1 und 2 besteht innen aus einer Innenschale 1 aus Kunststoff, beispielsweise Acryl und außen aus einer Außenschale 2 aus Stahl. Der Zwischenraum zwischen Innenschale und Außenschale, der etwa im 3 mm Bereich liegt, ist mit einem Füllstoff 3, vorzugsweise aus Polyurethan ausgefüllt.

Bei der Innenschale 1 schließt sich an den horizontalen Rand ein lotrechter Kragen 1a an, wie aus Figur 2 ersichtlich. Der Füllstoff 3 setzt sich in diesem Bereich ebenfalls durch einen Kragen 3a fort. Bei der Außenschale 2 indessen, fehlt ein solcher Kragen. Sowohl an der Innenschale, als auch an der Außenschale sind Abflußöffnungen 1b bzw. 2a gebildet.

Bei der erfindungsgemäßen Herstellung werden sowohl Innenschale als auch Außenschale als Rohlinge in der auf Fig. 1 und 2 dargestellten Form durch Tiefziehen hergestellt.

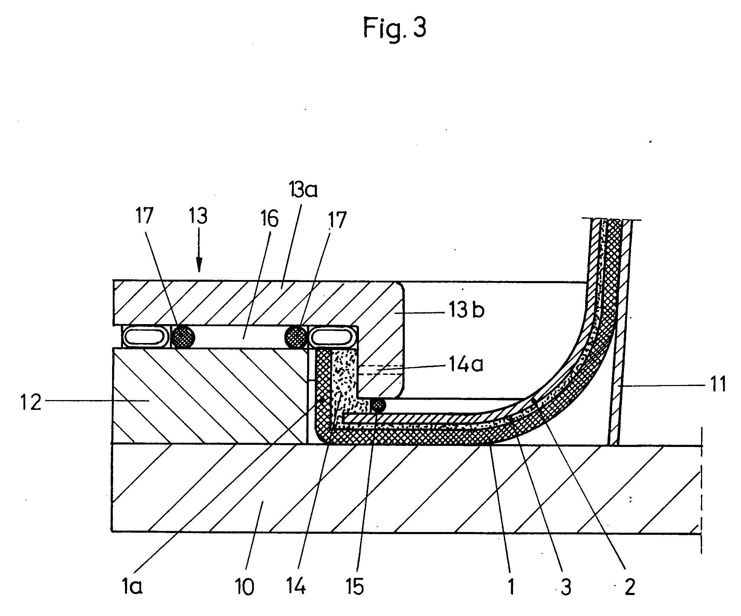

Im folgenden wird anhand von Figur 3 das Herstellungsverfahren erläutert. Es ist dabei ein Spannwerkzeug vorgesehen, bestehend aus einer Grundplatte 10 mit einem Stützgestell 11, einem Blockrahmen 12, umlaufend entsprechend der Grundrißform der Wanne und einem im Schnitt rechtwinkligen, ebenfalls umlaufenden Dichtungsrahmen 13.

Das Verfahren beginnt damit, daß die tiefgezogene, auf fertige Höhe gefräste und gereinigte Innenschale 1 aus Kunststoff mit ihrem Rand auf die Grundplatte 10 aufgelegt wird, wobei das angepaßte Stützgestell 11 zur Positionierung dient. Der Kragen 1a der Innenschale liegt dabei unmittelbar neben dem umlaufenden Blockrahmen 12.

Der nächste Verfahrenschritt besteht darin, daß die tiefgezogene, gebeizte und rückseitig grundemailierte Außenschale 2 aus Stahl, wie dargestellt aufgestülpt wird. Sie wird derart justiert, daß mit Hilfe von Abstandshaltern zwischen den beiden Schalen ein gleichmäßiger Zwischenraum im 3mm Bereich bleibt.

Beide Schalen werden dann ringsum mit Hilfe eines Dichtungsrahmens 13 mit einem horizontalen Schenkel 13a und einem vertikalen Schenkel 13b eingespannt. Der horizontale Schenkel 13a stützt sich dabei auf zwei Dichtungsschnüre 17 ab, die ihrerseits auf dem Blockrahmen 12 liegen, wobei zwischen den Dichtungsschnüren eine Vakuumkammer 16 gebildet ist. Der vertikale Schenkel 13b übt über eine weitere Dichtungsschnur 15 auf die beiden Schalen 1 und 2 einen Druck aus. Zwischen dem vertikalen Schenkel 13b und dem Kragen 1a der Innenschale ist ein umlaufender und abgedichteter Ringraum 14 gebildet, der an den Zwischenraum zwischen den beiden Schalen anschließt. Der Ringraum 14 ist umlaufendend mit Vakuum-Anschlüssen 14a versehen.

Der nächste Verfahrensschritt besteht darin, daß Polyurethan als Gießharz in die Abflußöffnung der Stahlwanne 2b injiziert wird, wobei gleichzeitig über Leitungen 14a im Ringraum zwischen dem horizontalen Schenkel 13a und dem Kragen 1a ein Vakuum erzeugt wird. Die injizierte Masse verteilt sich dadurch schnell und gleichmäßig im Zwischenraum zwischen den beiden Schalen. Sie gelangt ebenso in den Ringraum 14 neben den Kragen 3a der Innenwanne.

## Patentansprüche

1. Verfahren zur Herstellung von Verbund-Badewannen, bestehend aus einer Innenschale aus Kunststoff, einer Außenschale und einem dazwischenliegenden Füllstoff, wobei eine durch Tiefziehen geformte Innenschale (1) aus Kunststoff mit ihrem Rand auf eine Grundplatte eines Spannwerkzeuges aufgelegt wird
und eine vorgeformte Außenschale (2) derart übergestülpt und justiert wird, daß zwischen den Schalen ein Zwischenraum bleibt
und wobei die beiden Schalen (1), (2) umlaufend am Randbereich eingespannt werden,
gekennzeichnet durch die nachfolgend genannten weiteren Merkmale:
- die Außenschale (2) besteht aus Stahl;
- die beiden Schalen werden mittels eines Dichtungsrahmens (13) eingespannt, wobei neben dem Kragen (1a) der Innnenschale umlaufend ein abgedichteter Ringraum (14) eingehalten ist;
- Füllstoff wird in die Abflußöffnung (2a) der Schalen injiziert, wobei zwecks gleichmäßiger Verteilung desselben der Ringraum (14) an ein Vakuum angeschlossen ist.

2. Vorrichtung zur Durchführung des Verfahrens nach Anspruch 1 wobei:
- ein Spannwerkzeug eine Grundplatte (10) aufweist mit einem der Innenschale angepaßten Stützgestell (11) sowie mit einem der Grundrißform der Innenschale angepaßten Blockrahmen (12);
- dem Blockrahmen ein Dichtungsrahmen (13) zugeordnet ist, der mit einem vertikalen Schenkel (13b) über eine Dichtungsschnur (15) die Innenschale und die Außenschale zusammendrückt, wobei gegenüber dem Kragen (1a) der Innenschale ein abgedichteter Ringraum (14) gebildet ist, der mit dem Zwischenraum zwischen den beiden Schalen in Verbindung steht;
- der Ringraum ringsum mit Vakuum-Anschlüssen (14a) versehen ist.

3. Vorrichtung nach Anspruch 2, dadurch gekennzeichnet, daß ein horizontaler Schenkel (13a) des Dichtungsrahmens auf zwei Dichtschnüren (17) liegt, die sich auf dem Blockrahmen (12) abstützen, wobei zwischen den Dichtungsschnüren eine Vakuumkammer (16) gebildet ist.

## Claims

1. Method of making composite bathtubs consisting of an inner shell of plastics material, an outer shell and an interposed filling material, an inner shell (1) formed by deep drawing from plastics material being positioned with its margin on the base plate of a clamping tool,
and a pre-formed outer shell (2) being slipped over and adjusted in such a manner that a space remains between the shells,
the two shells (1), (2) being clamped circumferentially at the marginal region,
characterised by the following further features:
- the outer shell (2) consists of steel;
- the two shells are clamped by means of a sealing frame (13), adjacent to the collar (1a) of the inner shell a sealed annular space (14) is provided at the circumference;
- a filling material is injected in the discharge opening of the shells, for the purpose of a uniform distribution of said filling material the annular space (14) being connected to a vacuum.

2. Apparatus for carrying out the method according to claim 1, wherein:
- a clamping tool comprises a base plate (10) with a supporting frame (11) adapted to the inner shell as well as a block frame (12) adapted to the plan form of the inner shell;
- a sealing frame (13) is associated with the block frame and presses the inner shell and the outer shell against each other by means of a vertical leg (13b) via a sealing strip (15), a sealed annular space (14) being formed adjacent to the collar (1a) of the inner shell which communicates with the space between the two shells;
- the annular space is provided all around with vacuum connections (14a).

3. Apparatus as claimed in claim 2, characterised in that a horizontal leg (13a) of the sealing frame is reposed on two sealing strips (17) which are supported on the block frame (12), between said sealing strips a vacuum chamber (16) being formed.

## Revendications

1. Procédé pour la fabrication de baignoires composites, constituées par une coque intérieure en matière plastique, par une coque extérieure et par une matière de charge interposée entre ces coques, où une coque intérieure en matière plastique (1) formée par emboutissage est par son bord posée sur une plaque de base d'un outil de serrage
et où une coque extérieure préformée (1) est placée sur la coque intérieure et est ajustée de manière telle qu'il subsiste un interstice entre les coques
et où les deux coques (1), (2) sont serrées sur tout leur pourtour le long de leur zone marginales,
caractérisé par les caractéristiques supplémentaires ci-après énoncées:
- la coque extérieure (2) est en acier;
- les deux coques sont enserrées au moyen d'un cadre d'étanchéité (13), une chambre annulaire (14) périphérique hermétiquement fermée étant maintenue à côté du collet (1a) de la coque intérieure;
- une matière de charge ou de remplissage est injectée dans l'orifice d'écoulement (2a) des coques, et aux fins d'une distribution uniforme de cette matière de charge, la chambre annulaire (14) est soumise à une dépression.

2. Dispositif pour la mise en oeuvre du procédé de la revendication 1, où:
- un outil se serrage présente une plaque de base (10), avec un châssis de support (11) adapté à la coque intérieure ainsi qu'avec un cadre de blocage (12) adapté au tracé horizontal de la coque intérieure;
- au cadre de blocage est associé un cadre d'étanchéité (13), qui au moyen d'une aile verticale (13b) comprime par l'intermédiaire d'un cordon d'étanchéité (15) la coque intérieure et la coque extérieure, opération au cours de laquelle il est formé une chambre annulaire hermétique (14) à l'égard du collet (1a) de la coque intérieure, chambre qui est en communication avec l'interstice entre les deux coques;
- la chambre annulaire est sur son pourtour dotée de raccords à dépression (14a).

3. Dispositif suivant la revendication 2, caractérisé en ce qu'une aile horizontale (13a) du cadre d'étanchéité est posée sur deux cordons d'étanchéité (17) qui s'appuient sur le cadre de blocage (12), une chambre à vide (16) étant ainsi formée entre les cordons d'étanchéité.
